# EUROPEAN PATENT SPECIFICATION

(11) **EP 2 133 229 B1**
(45) Date of publication and mention of the grant of the patent: **15.08.2012**
(21) Application number: 08157893.2
(22) Date of filing: 09.06.2008
(51) Int. Cl.: B60J 1/18

(54) **A method of attaching a glass window to an automobile soft top**
Verfahren zum Befestigen eines Glasfensters an einem Faltverdeck eines Automobils
Procédé de fixation d'une fenêtre en verre sur une capote pliante d'une automobile

(43) Date of publication of application: 16.12.2009
(73) Proprietor: Gahh, LLC, North Hollywood, CA 91605-1611 (US)
(72) Inventor: Brown, Martin, North Hollywood, CA 91605-1611 (US); Markarian, Neshan, North Hollywood, CA 91605-1611 (US); Bath, John, North Hollywood, CA 91605-1611 (US)
(74) Representative: Fitchett, Stuart Paul

(56) References cited:
- EP-A- 0 754 581
- EP-A- 0 878 337
- DE-C1- 4 210 492
- DE-U1- 20 207 069
- US-A- 6 015 181

## Description

### Background of the Invention

The present invention is directed to a method of installing a glass window in an automobile soft top, and more particularly, to the incorporation of a metal ring between the soft top material and the glass window for proper bonding. It also relates to a soft top for an automobile incorporating a metal ring between the soft top material and the glass window for proper bonding.

The attachment of a glass window in an automobile soft top has been an age-old problem. Several previous methods of installing a glass window to a soft top include bonding the glass directly to the soft top using various glues, silicones or other similar bonding agents. Another previous method includes taping the window directly to the soft top using double sided tape, such as 3M VHB tape. Still, other methods include bonding the window to the soft top using a thermally activated adhesive or tape, molding or encapsulating the window into the soft top, or clamping the window into the soft top using various fasteners.
Typically, automobile soft tops are constructed using vinyl or canvas. Both of these materials are very difficult, if not impossible, to bond to a glass surface. Therefore, soft tops have traditionally had windows constructed of plastic so that they could be sewn into the automobile top. However, the plastic windows tended to scratch and discolor easily, leading to severe impairment of vision. Because of this problem, consumers demanded automobile tops having glass windows installed. This demand led automobile top manufacturers to utilize the previously identified methods to install a glass window into a soft top, however, these prior methods have had numerous disadvantages and problems, including, a high rate of failure of the bond holding the window to the top, resulting in the window falling out of the top and/or leaking water into the vehicle. Another problem associated with prior methods is that they required expensive tooling and equipment to achieve the required bond between the glass and the soft top material. Prior methods required a high degree of skilled labor and these processes were very labor intensive. Yet, another problem is that it is difficult to replace a glass window in the same soft top in the event a window is broken or to have more than one window installed in the top.

Aesthetically, the outside joint between the soft top and the window is cosmetically unappealing. In addition, the use of clamps and fasteners are expensive when needed in low volumes, such as the after market or replacement top segment, which makes the top more expensive and less affordable for consumers. Consequently, a need exists for a new method for installing a glass window in a folding or removable automobile soft top which addresses the problems associated with prior methods.

US 6,015,181 discloses a two-piece frame for securing a window to a soft top.

### Summary of the Invention

The present invention is a new method for installing a glass window in a folding or removable automobile soft top, which addresses the problems associated with prior methods, by not requiring the soft top material to be bonded directly to the glass window. The method includes the introduction of a ring, as an intermediary between the soft top material and the glass window, which ring provides a low cost, reliable solution to the problems encountered by prior methods of glass window installation in automobile soft tops.

The present invention provides a method of attaching a glass window to an automobile soft top as recited in Claim 1 of this specification.

The method of the present invention may begin with the selection of a soft top for installation of the glass window. Next, a glass window to be installed in the automobile top may be selected. A hole, slightly smaller than the window, is cut into the automobile top in the location where the window is to be installed. Next, a retainer ring that has been sized to the window and has an outer diameter substantially matching an outer dimension of the glass window is selected and then placed on the automobile soft top over the hole so that the perimeter of the hole extends evenly past the inside diameter of the ring. Next, an adhesive is applied to the ring and the portion of the top extending past the ring. Alternatively, or in addition to, an adhesive may be applied to that portion of the automobile soft top that the ring will rest on, prior to placing the ring on the automobile soft top. Next, the portion of the automobile soft top extending past the ring is rolled or pressed around the exposed surface of the ring, thereby encasing all, or a portion of, the ring with the automobile soft top. A bonding agent, such as an automotive urethane sealant, is then applied to the automobile soft top in the area of the automobile soft top that the window will be attached to. Finally, the window is placed onto the soft top such that the bonding agent is compressed between the soft top and the window. Once the bonding agent has cured, the installation is complete.

The advantages of the present invention over prior methods of window installation include faster installation time, reduced worker skill level, improved cosmetics, a stronger bond between the soft top material and the window, elimination of the need for expensive and complicated processing machinery, significant reduction in tooling or fixture costs, and the ability for multiple glass windows to be installed in the same automobile soft top.

### Brief Description of the Drawings

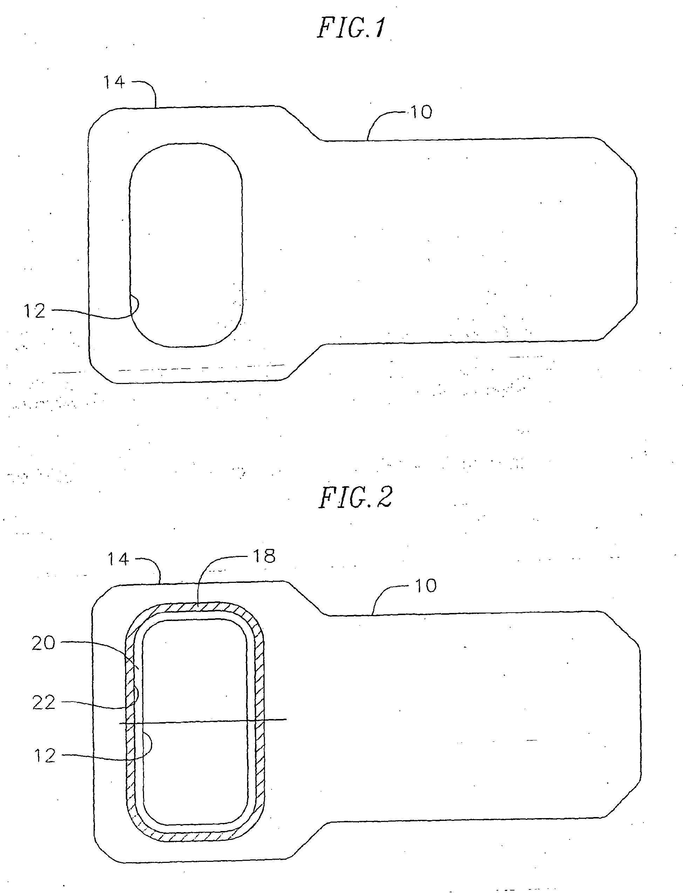

Fig. 1 is a plan view of an automobile soft top having a hole for a glass window;
Fig. 2 is a plan view of Fig. 1 including a ring placed around the window opening;
Fig. 3 is a partial cross-sectional view of the ring and soft top; and
Fig. 4 is a cross-sectional view of the installed glass window to the soft top.

### Detailed Description of the Invention

Referring to the drawings, a method for installing a glass window in a folding or removable soft top is illustrated. Initially, automobile soft top 10 is selected. The size and configuration of the soft top is selected to fit the make and model of the automobile for which it is intended. Typically, the soft top is made of vinyl or canvas. A hole 12 is cut into the soft top in a rear portion 14 corresponding to the location of a rear window. The size of the hole12 is slightly smaller than the outer dimension of the window to be installed. Similarly, a glass window 16 is selected, having a size and configuration which is specific for the type of vehicle for which the soft top is intended. A metal retainer ring 18 which is sized to have an outer dimension substantially matching the outer dimension of the window, is selected and placed onto the automobile soft top 10 over the hole 12 so that a portion 20 of the soft top extends beyond an inside perimeter 22 of the retaining ring 18. Portion 20 should uniformly extend inside the inside perimeter 22 of the ring 18 around the entire hole 12.

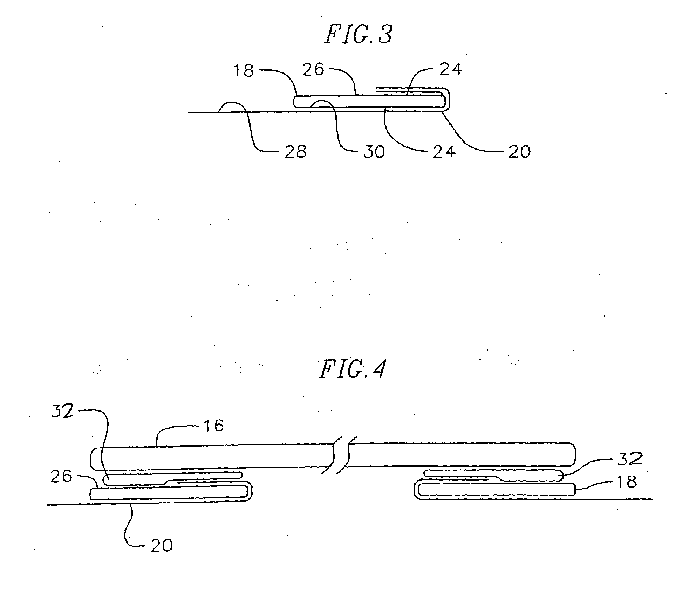

An adhesive 24, is applied to portion 20 of the soft top, which is then wrapped around the ring and secured to an inside surface 26 of the ring 18. Alternatively, or in addition thereto, adhesive 24 can be applied between an inside surface 28 of soft top portion 20 and an outside surface 30 of ring 18. This adhesive would be positioned between the ring and the soft top prior to installing the ring on the soft top. As indicated portion 20 extending past the ring is then rolled or pressed around the ring, thereby encasing at least a portion of the ring with the soft top, as seen best in Fig. 3. Referring specifically to Figure 4, the window 16 is then mounted by placing a bonding agent 30 such as an automotive urethane sealant, to the inside surface 26 of the ring and the window is then placed upon the bonding agent 30.

The present invention provides a method of attaching a glass window to an automotive soft top by bonding each of the glass window and the soft top to a metal retaining ring. Prior problems of adhering a glass window to a soft top are eliminated by each of the glass window and the soft top being separately attached to the metal ring. The present invention eliminates the problem of adhering glass to canvas or vinyl by allowing the glass to be adhered to a metal ring and the canvas or vinyl to be adhered to a metal ring. Consequently, a stronger and weather proof seal is created between the window and the soft top.

Although the present invention has been described and illustrated with respect to a preferred embodiment thereof, changes and modifications can be made therein which are within the full intended scope of the invention as herein after claimed.

## Claims

1. A method of attaching a glass window to an automobile soft top (10) comprising the steps of:
positioning a ring (18) having a one-piece construction around a window opening (12) in the soft top;
wrapping an edge portion of the soft top at the window opening around at least a portion of the ring (18);
securing the edge portion (20) of the soft top at the window opening to the ring by placing an adhesive (24) between the edge portion and the ring;
positioning a glass window (16) over the ring; and securing the window (16) to the ring by placing a bonding agent (32) between an inside surface (26) of the ring and the glass window (16) and placing the glass window (16) on the ring, **characterized in that** the step of positioning the glass window (16) over the ring comprises positioning over the ring a glass window (16) sized to have an outer dimension substantially matching the outer diameter of the ring.

2. The method of Claim 1, wherein the adhesive (24) is positioned on an inside surface (26) of the ring.

3. The method of Claim 1, wherein the adhesive is positioned on an outside surface (30) of the ring.

4. The method of Claim 1, wherein the bonding agent (32) is a sealant.

5. The method of Claim 1, wherein the ring (18) is larger than the window opening.

6. The method of Claim 4, wherein the sealant is an adhesive.

## Patentansprüche

1. Verfahren zum Befestigen eines Glasfensters an einem Faltverdeck eines Automobils (10), welches folgende Schritte umfasst:
Positionieren eines Rings (18) mit einem einteiligen Aufbau um eine Fensteröffnung (12) im Faltverdeck;
Einschlagen eines Randabschnitts des Faltverdecks an der Fensteröffnung um mindestens einen Teil des Rings (18);
Befestigen des Randabschnitts (20) des Faltverdecks an der Fensteröffnung am Ring durch Platzieren eines Klebstoffs (24) zwischen dem Randabschnitt und dem Ring;
Positionieren eines Glasfensters (16) über dem Ring; und Befestigen des Fensters (16) am Ring durch Platzieren eines Haftmittels (32) zwischen einer Innenfläche (26) des Rings und dem Glasfenster (16) und Platzieren des Glasfensters (16) auf dem Ring, **dadurch gekennzeichnet, dass** der Schritt des Positionierens des Glasfensters (16) über dem Ring das Über-dem-Ring-Positionieren eines Glasfensters (16) umfasst, das so bemessen ist, dass sein Außendurchmesser im Wesentlichen dem Außendurchmesser des Rings entspricht.

2. Verfahren gemäß Anspruch 1, wobei der Klebstoff (24) auf einer Innenfläche (26) des Rings positioniert wird.

3. Verfahren gemäß Anspruch 1, wobei der Klebstoff auf einer Außenfläche (30) des Rings positioniert wird.

4. Verfahren gemäß Anspruch 1, wobei das Haftmittel (32) ein Dichtstoff ist.

5. Verfahren gemäß Anspruch 1, wobei der Ring (18) größer ist als die Fensteröffnung.

6. Verfahren gemäß Anspruch 4, wobei der Dichtstoff ein Klebstoff ist.

## Revendications

1. Procédé de fixation d'une fenêtre en verre sur une capote pliante d'une automobile (10), comprenant les étapes consistant à :
positionner un anneau (18) ayant une construction monobloc autour d'une ouverture de fenêtre (12) pratiquée dans la capote pliante ;
envelopper une portion de bord de la capote pliante, au niveau de l'ouverture de fenêtre, autour d'une portion au moins de l'anneau (18) ;
assujettir la portion de bord (20) de la capote pliante, au niveau de l'ouverture de fenêtre, sur l'anneau en mettant une matière adhésive (24) entre la portion de bord et l' anneau ;
positionner une fenêtre en verre (16) au-dessus de l'anneau ; et assujettir la fenêtre (16) à l'anneau en mettant un agent de liaisonnement (32) entre une surface interne (26) de l'anneau et la fenêtre en verre (16), et en plaçant la fenêtre en verre (16) sur l'anneau, **caractérisé en ce que** l'étape consistant à positionner la fenêtre en verre (16) au-dessus de l'anneau comprend le positionnement au-dessus de l'anneau d'une fenêtre en verre (16) laquelle est dimensionnée de façon à présenter une dimension externe qui correspond sensiblement au diamètre externe de l'anneau.

2. Procédé selon la revendication 1, la matière adhésive (24) étant positionnée sur une surface interne (26) de l'anneau.

3. Procédé selon la revendication 1, la matière adhésive étant positionnée sur une surface externe (30) de l'anneau.

4. Procédé selon la revendication 1, l'agent de liaisonnement (32) étant un mastic d'étanchéité.

5. Procédé selon la revendication 1, l'anneau (18) étant plus grand que l'ouverture de fenêtre.

6. Procédé selon la revendication 4, le mastic d'étanchéité étant une matière adhésive.
